# EUROPÄISCHE PATENTSCHRIFT

(11) **EP 0 986 844 B1**
(45) Veröffentlichungstag und Bekanntmachung des Hinweises auf die Patenterteilung: **12.09.2001**
(21) Anmeldenummer: 98934810.7
(22) Anmeldetag: 27.05.1998
(51) Int. Cl.: H01S 3/06, H01S 3/094

(54) **VERFAHREN UND ANORDNUNG ZUR REDUZIERUNG DES PUMPLICHTS AM AUSTRITT EINES MANTELGEPUMPTEN FASERLASERS**
METHOD AND DEVICE FOR REDUCING THE PUMP LIGHT IN A SHEAT-PUMPED FIBER LASER OUTPUT
PROCEDE ET DISPOSITIF POUR REDUIRE LA LUMIERE DE POMPAGE A LA SORTIE D'UN LASER A FIBRE A POMPAGE PAR LA GAINE

(30) Priorität: 03.06.1997 DE 19723267
(43) Veröffentlichungstag der Anmeldung: 22.03.2000
(73) Patentinhaber: Heidelberger Druckmaschinen Aktiengesellschaft, 69115 Heidelberg (DE)
(72) Erfinder: JÜRGENSEN, Heinrich, D-24223 Raisdorf (DE)
(86) Internationale Anmeldenummer: DE9801449
(87) Internationale Veröffentlichungsnummer: WO9856083

(56) Entgegenhaltungen:
- EP-A- 0 497 140
- US-A- 4 829 529
- WEBER T ET AL: "Cladding-pumped fiber laser" IEEE JOURNAL OF QUANTUM ELECTRONICS, FEB. 1995, USA, Bd. 31, Nr. 2, Seiten 326-329, XP000489756 ISSN 0018-9197
- PERERA W L R ET AL: "Down-tapered double-clad fibre for diode array pumped lasers and amplifiers" ACOFT '95, 20TH AUSTRALIAN CONFERENCE ON OPTICAL FIBRE TECHNOLOGY (ACOFT '95). PROCEEDINGS, COOLUM BEACH, QLD., AUSTRALIA, 3-6 DEC. 1995, Seiten 216-219, XP002081952 ISBN 0-909394-39-3, 1995, Milsons Point, NSW, Australia, IREE Soc, Australia

## Beschreibung

Bei einem Fiberlaser besteht der Resonator aus einer speziellen Fiber, die im inneren Kern eine Single Mode Fiber enthält, die auf den zu erzielenden Wellenlängenbereich des Lasers dimensionsmäßig und materialmäßig abgestimmt ist und deren Durchmesser im Bereich von einigen µm liegt. Diese Laserfiber ist umgeben von einer Pumpfiber von einigen hundert µm im Durchmesser, in die das Pumplicht eingekoppelt wird. Die Laserfiber ist also in den Kern der Pumpfiber eingebettet. Umgeben ist die Pumpfiber von einem Mantel aus Material mit einem anderen Brechungsindex, der die Führung des Pumplichts in der Pumpfiber garantiert, wie das aus der Lichtwellenleitertechnik bekannt ist. Der Kern der Pumpfiber kann einen runden, aber auch davon abweichenden, z.B. einen rechteckigen oder quadratischen Querschnitt haben, um eine besonders gute Anpassung an die Pumpquelle (Laserdiode) zu ermöglichen.

Der Pumpmechanismus kommt dadurch zustande, daß das Pumplicht die Laserfiber anregt. Dadurch wird die Pumpenergie über die Länge der Fiber mehr und mehr verbraucht, und zwar wird von der Pumpquelle beginnend, der Energieinhalt der Pumpfiber zum Ende, d. h. zum Laseraustritt hin, etwa exponentiell abfallen. Mit Fiberlasem erhält man optische Wirkungsgrade von über 50 %. Dazu sind Fiberlängen von ca. 50 m erforderlich. Bis zum Ende der Fiber sind bis zu 90 % des Pumplichtes verbraucht. Wegen des exponentiellen Verbrauchs der Pumpleistung ist es aus ökonomischen Gründen nicht sinnvoll, die Pumpfiber noch länger zu machen, d. h. ca. 10% des Pumplichts tritt aus der Pumpfiber aus und ist dem Laserlicht aus dem inneren Kern der Faser überlagert, dabei tritt das Laserlicht als schlankes, beugungsbegrenztes Bündel aus der Laserfiber aus, während das Pumplicht einen sehr großen Öffnungswinkel hat.

Die Wellenlänge der Pumpquelle eines bekannten Fiberlasers liegt bei 900 nm, die Wellenlänge des zugehörigen Lasers bei 1100 nm. Die Pumpleistung dieses Lasers beträgt 20 W, die Laserleistung etwa 10 W. Dem Laserlicht sind etwa 2 W Pumpleistung überlagert.

Bei Anwendungen, die auf eine präzise Laserleistung in der Größenordnung von einem Prozent Wert legen, wie dies z. B. in der Reprografie erforderlich ist, führt die Anwesenheit des Pumplichtes zu erheblichen Problemen, da es wegen der anderen Apertur nicht dem Strahlengang des Laserlichtes folgt. Damit kommt es zu erheblichen Meßfehlern in den Sensoren durch Streulicht, das das Pumplicht verursacht. Ebenfalls kommt es in empfindlichen Anordnungen zu unzulässiger Erwärmung durch das Pumplicht.

Zwar könnte man das Pumplicht von dem Laserlicht durch ein steiles Kantenfilter trennen, aber bei den hohen Leistungsdichten werden die Kantenfilter leicht zerstört, was zu räumlich großer Bauweise und teuren Kantenfiltern führt. Ebenso wäre es denkbar, das Pumplicht mit geeigneten Blenden abzufangen. Das Problem dabei ist, daß entweder die Blenden so groß gemacht werden müssen, daß sie auch Pumplicht durchlassen oder es besteht die Gefahr, daß die Blenden bei geringer Dejustierung verbrennen.

Aufgabe der Erfindung ist, eine Verfahren und eine Anordnung zur Reduzierung des Pumplichts am Ausgang eines Fiberlasers derart zu verbessern, daß das verbleibende Pumplicht gar nicht erst bis zum Ende des Fiberlasers gelangt, sondern schon vorher völlig abgefangen wird, wodurch eine Verringerung des austretenden Pumplichts um mindestens den Faktor Hundert erreicht wird.

Diese Aufgabe wird durch die in den Ansprüchen 1 und 5 angegebenen Merkmale gelöst.

Vorteilhafte Weiterbildungen der Erfindung sind in den Unteransprüchen angegeben.

Die Erfindung wird im folgenden anhand einer Figur näher erläutert.

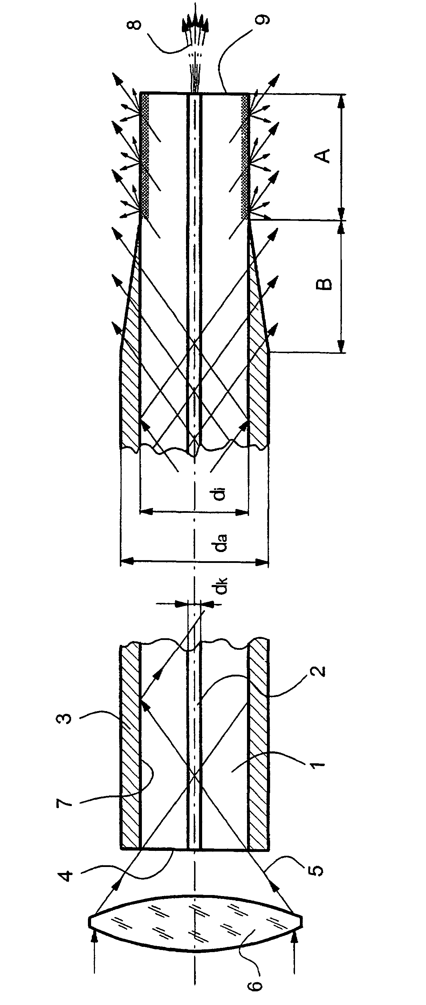

Die Figur zeigt einen Fiberlaser, der aus zeichentechnischen Gründen in zwei geschnittenen Teilen dargestellt ist. Der Fiberlaser besteht aus einer Laserfiber mit einem zentralen Kern (1) und einem Mantel (2) sowie aus einer Pumpfiber mit einem Kern, der gleichzeitig den Mantel (2) der Laserfiber bildet, und einem äußeren Mantel (3).

Die Pumpfiber (2, 3) möge bei einen Kerndurchmesser dₖ von ca. 7µm der Laserfiber (1, 2) einen Innendurchmesser dᵢ von ca. 300 µm und einen Außendurchmesser dₐ von ca. 600 µm haben.

An einem Lichteintritt (4) des Fiberlasers, dem linken Ende in der Zeichnung, wird das in einer nicht dargestellten Pumpquelle erzeugte Pumplicht (5) über eine Fokussierungsoptik (6) in die Pumpfiber (2, 3) eingespeist. Das Pumplicht (5) wird durch Totalreflexion an der Innenwand (7) des Mantels (3) der Pumpfiber (2, 3) geführt, was durch die mit Pfeilen versehenen Lichtstrahlen dargestellt ist. Durch den Pumpvorgang wird im Kern (1) der Laserfiber (1, 2) Laserlicht (8) angeregt, das an einem Lichtaustritt (9) des Fiberlasers, dem rechten Ende in der Zeichnung, aus dem Fiberlaser austritt.

Erfindungsgemäß wird die Pumpfiber (2, 3) auf dem letzten Stück, d.h. im rechten Teil der Zeichnung, (z.B. auf den letzten 50 cm) in einem Bereich (A) von ihrem Mantel (3) befreit, so daß er keine Wellenleiterfunktion mehr hat. Das kann durch Abätzen des Mantels (3) geschehen. Vorzugsweise wird der Mantel (3) keilförmig abgeätzt, so daß er, beginnend auf dem der Pumpquelle zugewendeten Ende des rechten Teils über z. B. 40 cm im Bereich (B) verjüngt wird und dann für weitere 10 cm im Bereich (A) völlig entfemt wird. Dadurch wird die verbliebene Pumpleistung von ca. 2 W über eine Länge von 40 cm kontinuierlich in die Umgebung abgeführt.

Üblicherweise ist der Mantel (3) der Pumpfiber (2, 3) von einer nicht dargestellten Schutzhülle aus zugfestem Material, z. B. aus Kevlar-Fasern, umgeben, die wiederum von einer ebenfalls nicht gezeigten Metallhülle ummantelt ist. Über die Länge des keilförmig abgeätzten Mantels (3) im Bereich (B) kann damit der Wärmeübergang in die Schutzhülle gesteuert werden, damit keine Überhitzung auftritt. Über die Länge des fehlenden Mantels (3) im Bereich (A) kann kontrolliert werden, wieviel vagabundierendes Pumplicht (5) noch zum Lichtaustritt (9) des Fiberlasers gelangt. Für die meisten Anwendungen wird ein Bereich von 10 cm völlig ausreichend sein. Um Reflexionen an dem dem Lichtaustritt (9) zugewandten Faserende zu vermeiden, kann die Mantelfläche des Faserendes im Bereich (A) zusätzlich noch aufgerauht werden, was in der Figur durch eine Schraffur angedeutet ist. Das Aufrauhen kann durch Anschleifen oder durch zusätzliches Ätzen erfolgen.

## Patentansprüche

1. Verfahren zur Reduktion des Pumplichts am Austritt eines Fiberlasers, der aus einer Laserfiber (1, 2) und einer sie umgebenden Pumpfiber (2, 3) besteht, **dadurch gekennzeichnet, daß** die Pumpfiber (2, 3) auf dem letzten Stück vor dem Lichtaustritt (9) für das Laserlicht (8) ganz oder teilweise von ihrem Mantel (3) befreit wird oder so hergestellt wird, daß das letzten Stück der Pumpfiber (2, 3) im Bereich des Lichtaustritts (9) nicht oder nur teilweise ummantelt ist.

2. Verfahren nach Anspruch 1, **dadurch gekennzeichnet, daß** der Mantel (3) der Pumpfiber (2, 3) so entfernt wird, daß der Durchmesser des Mantels (3) keilförmig zum Lichtaustritt (9) hin abnimmt.

3. Verfahren nach Anspruch 1 oder 2, **dadurch gekennzeichnet, daß** der Mantel (3) der Pumpfiber (2, 3) im Bereich des Lichtaustritts (9) vollständig entfernt wird.

4. Verfahren nach einem der Ansprüche 1 bis 3, **dadurch gekennzeichnet, daß** der Mantel (3) der Pumpfiber (2, 3) durch Ätzen abgetragen wird.

5. Anordnung zur Reduktion des Pumplichts am Austritt eines Fiberlasers, der aus einer Laserfiber (1, 2) und einer sie umgebenden Pumpfiber (2, 3) besteht, **dadurch gekennzeichnet, daß** das letzte Stück der Pumpfiber (2, 3) vor dem Lichtaustritt (9) für das Laserlicht (8) nicht oder nur teilweise ummantelt ist.

6. Anordnung nach Anspruch 5, **dadurch gekennzeichnet, daß** der Durchmesser des Mantels (3) der Pumpfiber (2, 3) keilförmig zum Lichtaustritt (9) abnimmt.

7. Anordnung nach Anspruch 6, **dadurch gekennzeichnet, daß** der Mantel (3) der Pumpfiber (2, 3) im Bereich des Lichtaustritts (9) vollständig entfernt ist.

8. Anordnung nach einem der Ansprüche 5-7, **dadurch gekennzeichnet, daß** der vom Mantel (3) befreite Bereich der Pumpfiber (2, 3) aufgerauht ist.

## Claims

1. Method for reduction of the pumped light at the outlet of a fibre laser which consists of a laser fibre (1, 2) and a pumping fibre (2, 3) surrounding it, **characterised in that** the pumping fibre (2, 3) is completely or partially free of its sheath (3) on the last section before the light outlet (9) for the laser light (8) or is manufactured in such a way that the last section of the pumping fibre (2, 3) in the region of the light outlet (9) is not sheathed or is only partially sheathed.

2. Method according to claim 1, **characterised in that** the sheath (3) of the pumping fibre (2, 3) is removed in such a way that the diameter of the sheath (3) decreases in a wedge shape towards the light outlet (9).

3. Method according to claim 1 or 2, **characterised in that** the sheath (3) of the pumping fibre (2, 3) is completely removed in the region of the light outlet (9).

4. Method according to one of claims 1 to 3, **characterised in that** the sheath (3) of the pumping fibre (2, 3) is removed by etching.

5. Arrangement for reduction of the pumped light at the outlet of a fibre laser which consists of a laser fibre (1, 2) and a pumping fibre (2, 3) surrounding it, **characterised in that** the last section of the pumping fibre (2, 3) before the light outlet (9) for the laser light (8) is not sheathed or is only partially sheathed.

6. Arrangement according to claim 5, **characterised in that** the diameter of the sheath (3) of the pumping fibre (2, 3) decreases in a wedge shape towards the light outlet (9).

7. Arrangement according to claim 6, **characterised in that** the sheath (3) of the pumping fibre (2, 3) is completely removed in the region of the light outlet (9).

8. Arrangement according to one of claims 5-7, **characterised in that** the region of the pumping fibre (2, 3) which is free of the sheath (3) is roughened.

## Revendications

1. Procédé pour réduire la lumière de pompage à la sortie d'un laser à fibre composé d'une fibre de laser (1, 2) et d'une fibre de pompage (2, 3) entourant la précédente,
**caractérisé en ce que**
la fibre de pompage (2, 3), dans sa dernière partie précédant la sortie (9) de la lumière laser (8) est totalement ou partiellement débarrassée de sa gaine (3), ou est fabriquée de manière que cette dernière partie de la fibre de pompage (2, 3) vers la sortie de lumière (9) n'est pas entourée par une gaine, ou l'est seulement en partie.

2. Procédé selon la revendication 1,
**caractérisé en ce que**
la gaine (3) de la fibre de pompage (2, 3) est retirée de manière que le diamètre de l'enveloppe (3) s'amenuise en forme de cône, vers la sortie (9) de lumière.

3. Procédé selon l'une des revendications 1 ou 2,
**caractérisé en ce que**
la gaine (3) de la fibre de pompage (2, 3) est totalement retirée dans la zone de la sortie (9) de lumière.

4. Procédé selon l'une quelconque des revendications 1 à 3,
**caractérisé en ce que**
la gaine (3) de la fibre de pompage (2, 3) est retirée par attaque chimique.

5. Dispositif pour réduire la lumière de pompage à la sortie d'un laser à fibre composé d'une fibre de laser (1, 2) et d'une fibre de pompage (2, 3) entourant la précédente,
**caractérisé en ce que**
la dernière partie de la fibre de pompage (2, 3) précédant la sortie (9) de la lumière laser (8) n'est pas entourée par une gaine, ou l'est seulement en partie.

6. Dispositif selon la revendication 5,
**caractérisé en ce que**
le diamètre de la gaine (3) de la fibre de pompage (2, 3) diminue en forme de cône, vers la sortie (9) de lumière.

7. Dispositif selon la revendication 6,
**caractérisé en ce que**
la gaine (3) de la fibre de pompage (2, 3) est totalement retirée dans la zone de la sortie (9) de lumière.

8. Dispositif selon l'une quelconque des revendications 5 à 7,
**caractérisé en ce que**
la partie de la fibre de pompage (2, 3) qui est débarrassée de la gaine (3) est rendue rugueuse.
